(19) Europäisches Patentamt
European Patent Office
Office européen des brevets

(11) **EP 2 497 627 B1**

(12) **EUROPEAN PATENT SPECIFICATION**

(45) Date of publication and mention of the grant of the patent:
**01.03.2017 Bulletin 2017/09**

(21) Application number: **09851076.1**

(22) Date of filing: **04.11.2009**

(51) Int Cl.:
***B29C 73/16*** *(2006.01)* ***B60S 5/04*** *(2006.01)*
*B29L 30/00* *(2006.01)*

(86) International application number:
**PCT/JP2009/068813**

(87) International publication number:
**WO 2011/055422 (12.05.2011 Gazette 2011/19)**

(54) **PUNCTURE REPAIR KIT**

PUNKTIONSREPARATURKIT

KIT DE RÉPARATION POUR CREVAISON

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.09.2012 Bulletin 2012/37**

(73) Proprietor: **Sumitomo Rubber Industries, Ltd.**
**Kobe-shi, Hyogo 651-0072 (JP)**

(72) Inventors:
• **ISHIDA Takaaki**
**Kobe-shi**
**Hyogo 651-0072 (JP)**

• **KOJIMA Yoshihide**
**Kobe-shi**
**Hyogo 651-0072 (JP)**

(74) Representative: **Manitz, Finsterwald & Partner GbR**
**Martin-Greif-Strasse 1**
**80336 München (DE)**

(56) References cited:
**EP-A1- 1 291 158    EP-A2- 1 605 162**
**DE-A1- 19 846 451    DE-A1-102004 060 662**
**JP-A- 2008 307 861    JP-A- 2009 226 891**
**JP-A- 2009 226 892**

## Description

Technical Field

The present invention relates to a puncture repair kit for making an emergency repair to a punctured tire by sequentially injecting a puncture sealant and compressed air into the tire. The features of the preamble of the independent claim are known from EP 1 291 158 A1. Related technologies are known from EP 1 605 162 A2 and DE 198 46 451 A1.

Background Art

For example, Patent Document 1 suggests a puncture repair kit for making emergency repairs to a punctured tire by pumping up the tire through sequential injection of a puncture sealant and compressed air into the tire, and then running a vehicle with the ti re in this state, such that the puncture sealant covers the enti re inner cavity surface of the ti re to seal the puncture as an emergency repair.

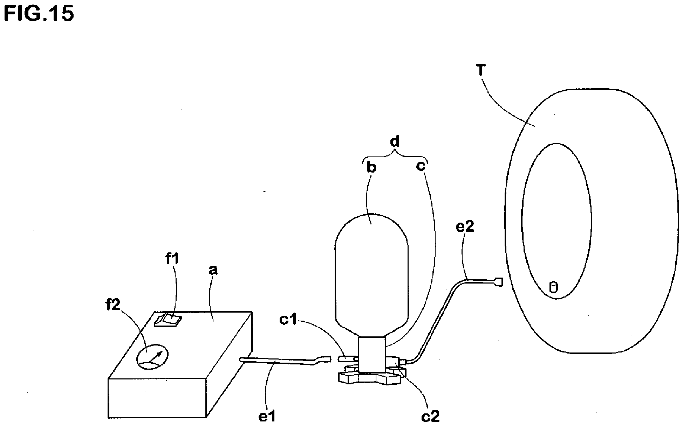

This kind of a repair kit includes a compressor device a generating compressed air; and a bottle unit d including a bottle container b storing a puncture sealant and a cap c attached upon an opening portion of the bottle container b, as shown in Fig. 15. The cap c is formed with an air intake opening portion c1 for feeding compressed air into the bottle container and a sealant/compressed air retrieval opening portion c2 for sequentially retrieving the puncture sealant and the compressed air from the bottle container b by the feeding of the compressed air. The air intake opening porti on c1 is connected to an air supply hose e1 from the compressor device a, and the sealant/compressed air retrieval opening portion c2 is coupled to one end of a feeding hose e2 for connection of an air valve of a tire T.

Citation List

Patent Literature

[PTL1] Japanese Patent Application Publication No. 2000-108215

summary of Invention

Technical Problem

The foregoing repair kit requi res the two hoses e1 and e2 which are likely to be laid in an incorrect manner. In addition, the bottle unit d is less stable and may turn over during operation, so that a required amount of puncture sealant cannot be injected.

The inventor thus suggests that a compressed air discharge openi ng portion of the compressor devi ce a and the air intake opening portion c1 of the bottle unit d be fitted and connected directly together. Accordingly, the bottle unit d and the compressor device a can be integrated and lowered in position of a gravity center, thereby suppressing turnover of the bottle unit d with increased stability. Besides, this arrangement does not need the hose e1 on the air intake side, thereby eliminating a possibility of incorrect hose laying.

In the case of the foregoing direct connection, however, the bottle unit d and the compressor device a are connected while the two are lifted. Therefore, there is a ri sk that the compressor devi ce a may fall down during operation and a power switch f1 or a pressure gauge f2 provided on the upper surface of the compressor device a is broken. since the compressor device a is formed in as small a size as possible, and is placed on the ground and used in a low position, the power switch f1 and the pressure gauge f2 are to be formed on the upper side of the compressor device a, from the viewpoint of operability.

Accordingly, the inventor suggests that the power switch f1 and the pressure gauge f2 be attached to depressions on the upper surface of the compressor device a, so that, even if the compressor device a falls down, the power switch f1 and the pressure gauge f2 are protected from breakage due to collision against the ground. In this case, however, when the compressor device a is used in the rain, rainwater piles up in the depressions to cause another problem of occurrence of an electrical failure.

Therefore, an object of the present invention is to provide a puncture repair kit that allows direct connection between a bottle unit and a compressor device to suppress turnover of the bottle unit and eliminates one of two hoses to lose a possibility of incorrect hose laying; prevents breakage of a power switch and a pressure gauge at falling of the compressor device; and even if the kit is used in the rain, suppresses a failure resulting from rainwater.

solution to Problem

To solve the problem, an invention of claim 1 of the present invention is a puncture repair kit, comprising:

a compressor device, including a power switch, a compressor main body that is driven by the power switch and generates compressed air, and a pressure gauge that measures a pressure of the compressed air from the compressor main body, stored within a rectangular box-shaped storage case; and
a bottle unit, including a bottle container containing a puncture sealant and a cap attached upon an opening portion of the bottle container, wherein

the compressor device includes a compressed air discharge opening portion for discharging compressed air,
the cap includes a bottom pl ate porti on consti tuti ng a bottom surface, a bottle mounting portion for mounting the opening portion of the bottle container, and a constricted waist portion disposed between the bottom plate portion and the bottle mounting portion,
the waist portion is provided with an air intake opening portion for feeding compressed air from the compressed air discharge opening portion into the bottle container, and a sealant/compressed air retrieval opening portion for sequentially retrieving the puncture sealant and the compressed air from the bottle container by the feeding of the compressed air, one of the compressed air discharge opening portion and the air intake opening portion includes a connection nozzle protruding toward the other in a forward direction, and the other includes a nozzle receiver into which the connection nozzle is inserted and fitted, which allows direct connection of the compressor device and the bottle unit, the storage case has on an upper surface thereof a switch mounting depression for mounting the power switch and a pressure gauge mounting depression for mounting the pressure gauge, the power switch and the pressure gauge being mounted upon bottom portions of the respective mounting depressions at a distance of 3 to 15 mm downward from the upper surface, and drainage channels are formed upon the upper surface so as to extend at a downward incline from the mounting depressions toward outer side surfaces of the storage case.

Advantageous Effects of Invention

As described above, in the present invention, one of the compressed air discharge opening portion of the compressor device and the air intake openi ng portion of the bottle unit, i s a connecti on nozzle, and the other is a nozzle receiver into which the connection nozzle is inserted and fitted. This allows di rect connecti on of the compressor device and the bottle unit. Accordingly, the two can be integrated and lowered in position of a gravity center, thereby to suppress turndown of the ki t wi th increased stability at installation. In addition, the present invention does not need a conventional hose on the air intake side, thereby eliminating a possibility of incorrect hose laying.
The power switch and the pressure gauge are mounted upon the bottom portions of the mounting depressions on the upper surface of the storage case, at a distance of 3 to 15 mm downward from the upper surface. This makes it possible to prevent that, even if the compressor device falls down, the power switch and the pressure gauge collide directly against the ground and are broken. In addition, drainage channels are formed on the upper surface so as to extend at a downward incline from the mounting depressions toward the outer wall surfaces of the storage case. Therefore, even if the kit is used in the rain, rainwater does not pile up in the mounting depressions, thereby making it possible to prevent occurrence of an electric failure resulting from rainwater.

Brief Description of Drawings

Fig. 1 is a perspective view of a puncture repair kit of the present invention that is used in puncture repair;
Fig. 2 is a perspective view of a compressor device;
Fig. 3 is a cross sectional view of an internal structure of the compressor device;
Fig. 4 is an exploded perspective view of a compressor main body;
Fig. 5 is a partial cross sectional view of major components of the compressor main body;
Fig. 6 is a cross sectional vi ew of a compressed air discharge opening portion and an air intake opening portion that are not yet joined together;

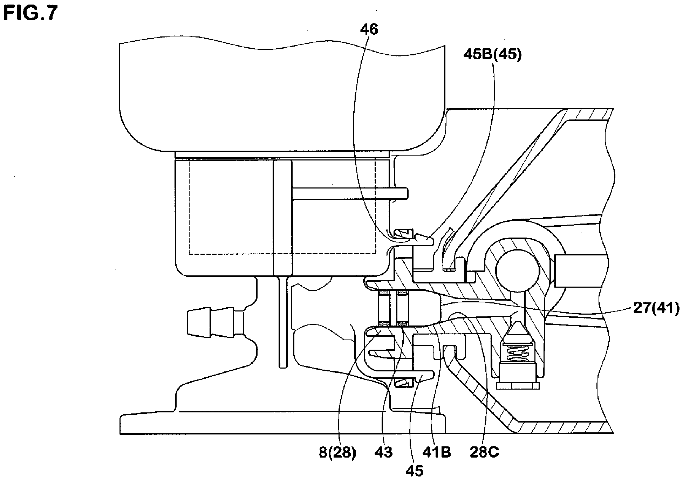

Fig. 7 is a cross sectional view of the compressed ai r di scharge opening portion and the air intake opening portion that are joined together;
Fig. 8 is a cross sectional view of a cap with a bottle container;
Fig. 9 is a horizontal sectional view of a waist portion of the bottle container;

Fig. 10 is a cross sectional view of guide grooves and an operation thereof;

Fig. 11 is a cross sectional view of a power switch and a pressure gauge that are mounted;

Fig. 12 is a perspective view of mounting depressions for the power switch and the pressure gauge;

Fig. 13 is a plan view of the mounting depressions for the power switch and the pressure gauge;

Fig. 14 is a side view of a feeding hose in storage; and

Fig. 15 is a perspective view of a conventional puncture repair kit.

Reference Signs List

| | |
|---|---|
| 1 | Puncture repair kit |
| 2 | Compressor device |
| 2S | Bottom surface |
| 3 | Bottle unit |
| 4 | Bottle container |
| 5 | Opening portion |
| 6 | Cap |
| 6S | Bottom surface |
| 7 | sealant/compressed air retrieval opening portion |
| 8 | Compressed air discharge opening portion |
| 9 | Storage case |
| 10 | Piston |
| 11 | Pump chamber |
| 12 | Cylinder |
| 13 | Compressor main body |
| 17 | crank mechanism |
| 22 | Pressure gauge |
| 27 | Air intake opening portion |
| 28 | Nozzle receiver |
| 31 | Bottom plate portion |
| 32 | Bottle mounting portion |
| 33 | waist portion |
| 41 | connection nozzle |
| 54 and 55 | Mounting depression |
| 54a and 55a | Bottom portion |
| 57 and 60 | Drainage channels |
| H1 and H2 | Distance |
| M | Motor |
| SW | Power switch |
| SU | Upper surface |

Description of Embodiments

An embodi ment of the present i nventi on will be descri bed bel ow in detail.

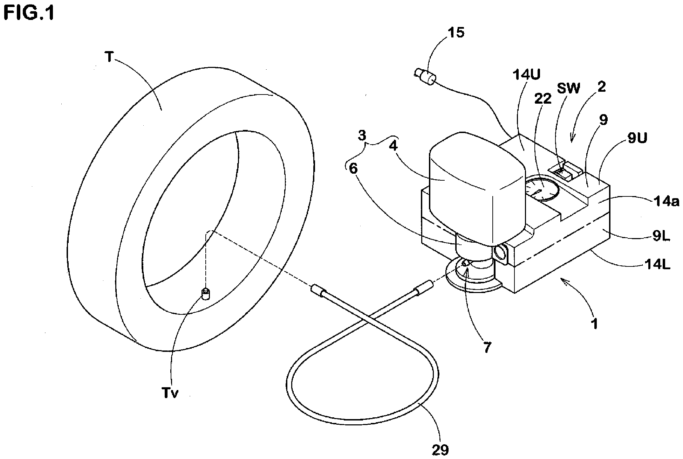

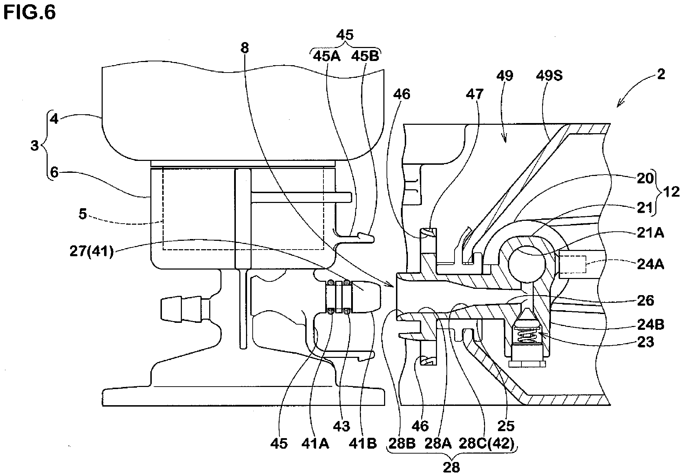

As shown in Fig. 1, a puncture repair kit 1 of this embodiment includes a compressor device 2 and a bottle unit 3, and the bottle unit 3 is formed by a bottle container 4 storing a puncture sealant and a cap 6 mounted upon an opening portion 5 (shown in Fig. 6) of the bottle container 4.

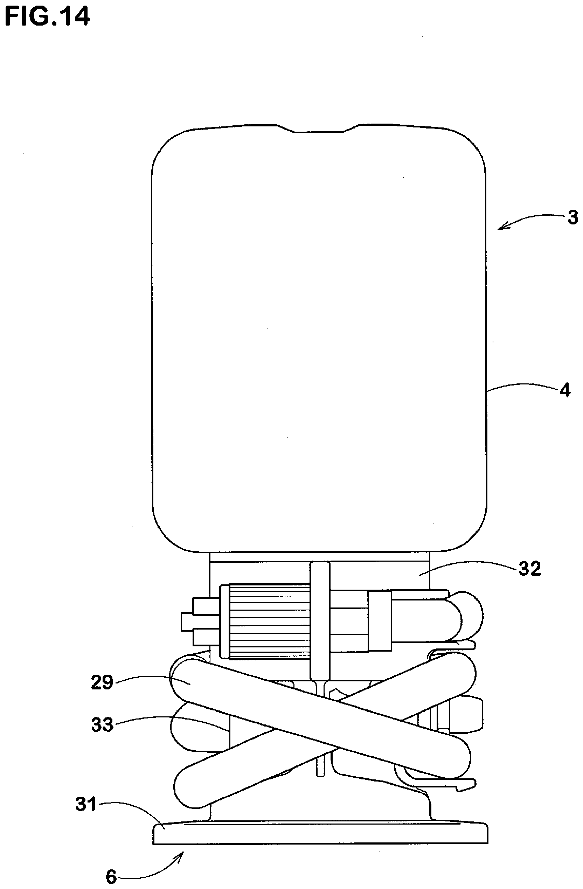

In addition, the compressor device 2 and the bottle unit 3 are directly connected together without intervention of a hose or the like at a puncture repair site. A feeding hose 29 is joined in advance to a sealant/compressed air retrieval opening portion 7 of the bottle unit 3. The feeding hose 29 is wound around the cap 6 and stored in the joined state within a vehicle, as shown in Fig. 14.

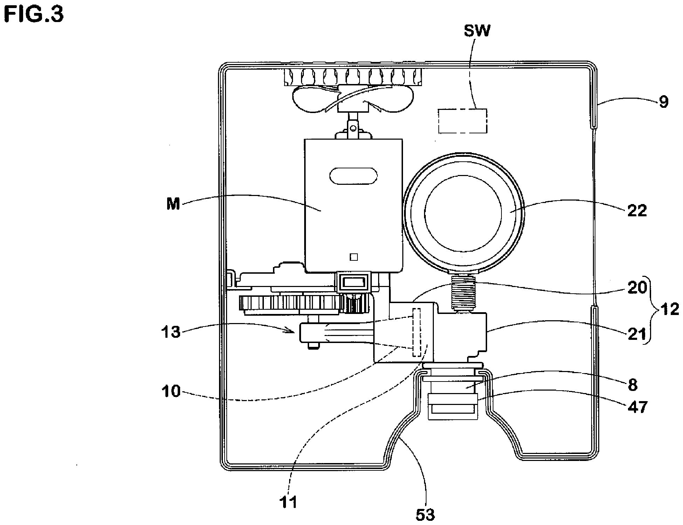

As shown in Fig. 3, the compressor device 2 is configured to store in a storage case 9, at least a power switch SW, a compressor main body 13 that is driven by the power switch sw and generates compressed ai r, and a pressure gauge 22 that measures a pressure of the compressed air from the compressor main body 13.

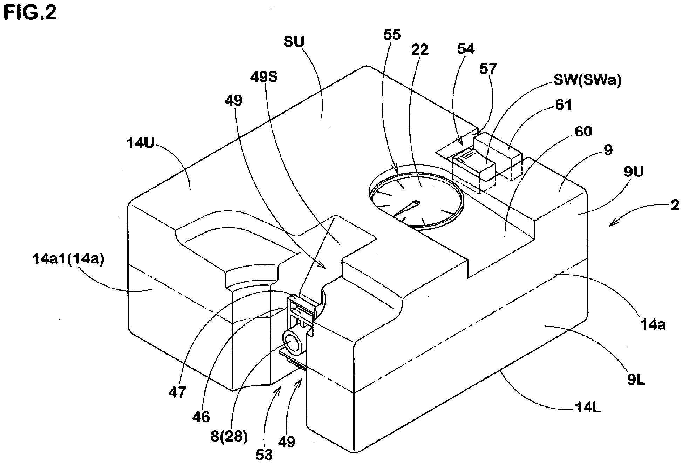

As shown in Figs. 1 and 2, the storage case 9 is formed in the shape of a rectangular box with a small height, in which a peripheral wall portion has four sides surrounded by side plate portions 14a, and has upper and lower ends closed by an upper plate portion 14U and a lower plate portion 14L. In this example, the storage case 9 is capable of being disassembled into upper and lower case portions 9u and 9L.

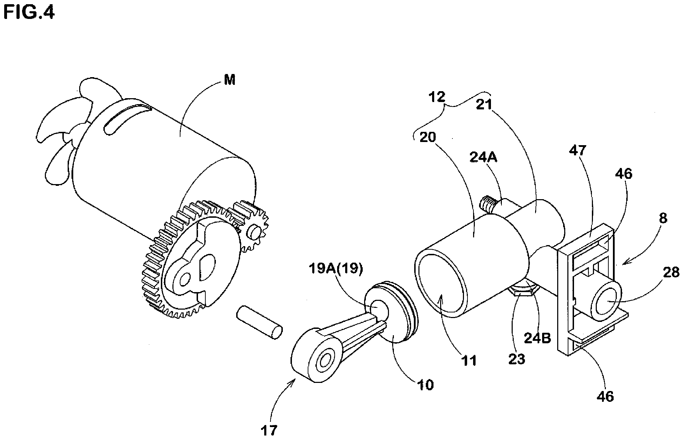

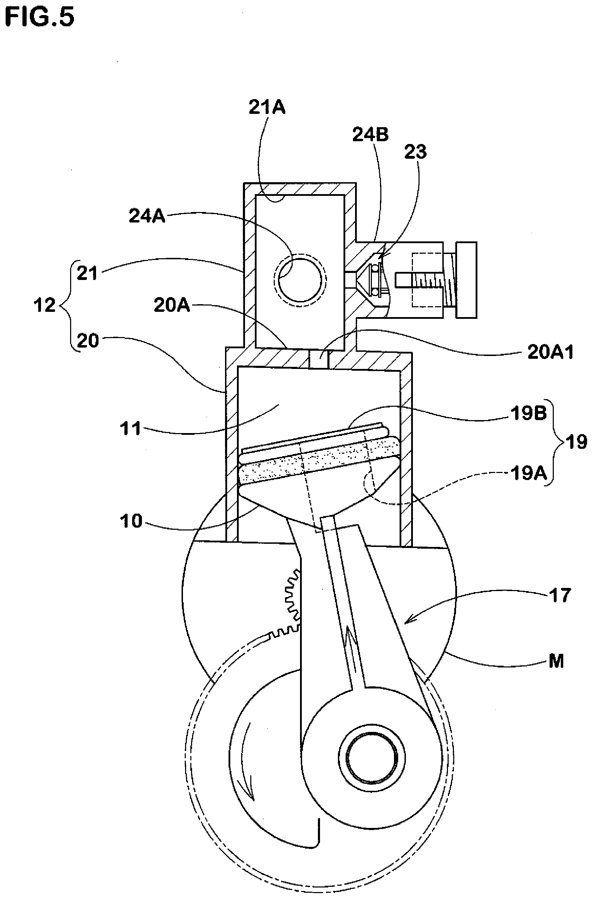

As shown in Figs. 4 and 5, the compressor main body 13 includes a motor M; a piston 10 coupled to the motor M via a crank mechanism 17; and a cylinder 12 that stores the piston 10 in a reciprocable manner and forms a pump chamber 11 for compressing air between the cylinder 12 and the piston 10.

The motor M may use any of various commercialized DC motors operating with a 12-v direct current power source in an automobile. The motor M is connected to a power cord with a power plug 15 at an end connectable to a cigarette lighter socket in an automobile, via the power switch SW attached to the upper plate portion 14U of the storage case 9. The power plug 15 is stored removably in a depression (not shown) of the lower plate portion 14L.

The piston 10 is formed with an air intake valve 19 using an air intake hole 19A that extends so as to penetrate the piston 10 in a direction of an axial core thereof, and a valve 19B such as an elastic body of rubber, synthetic resin, metal, or the like, for example, to close the air intake hole 19A, with a spring property from the pump chamber side.

In this example, the cylinder 12 includes integrally a circular cylinder main body 20 forming the pump chamber 11 and a cylinder subpart 21 at a back end side of the cylinder main body 20 to form a surge tank chamber 21A for reserving compressed air from the pump chamber 11 and reducing pressure pulsation of the piston 10. In this example, the surge tank chamber 21A communicates with the pump chamber 11 via a small hole 20A1 formed on a partition wall 20A closing a back end of the cylinder main body 20.

A compressed air discharge opening portion 8 for discharging compressed air is formed so as to protrude from a peripheral wall of the cylinder subpart 21. Besides, in this example, a first coupling portion 24A for mounting the pressure gauge 22 and a second coupling portion 24B for mounting a relief valve 23, are provided so as to protrude in different directions from the peripheral wall of the cylinder subpart 21.

As shown in Fig. 6, the compressed air discharge opening portion 8 includes a cylindrical portion 25 protruding from the cylinder subpart 21, and the cylindrical portion 25 has a discharge flow path 26 therewithin so as to extend from the surge tank chamber 21A. The discharge flow path 26 forms at an opening end side thereof a nozzle receiver 28 connected to the air intake opening portion 27 provided on the bottle unit 3. The nozzle receiver 28 has a parallel hole portion 28A with a constant inner diameter, and front and back tapered hole portions 28B and 28c formed in the shape of a cone tapered toward the cylinder subpart 21 on front and back sides of the parallel hole portion 28A.

Next, the bottle unit 3 is formed by the bottle container 4 storing a puncture sealant and the cap 6 attached upon the opening portion 5 of the bottle container 4, and is directly connected to the compressor device 2, in an inverted state with the cap 6 faced downward.

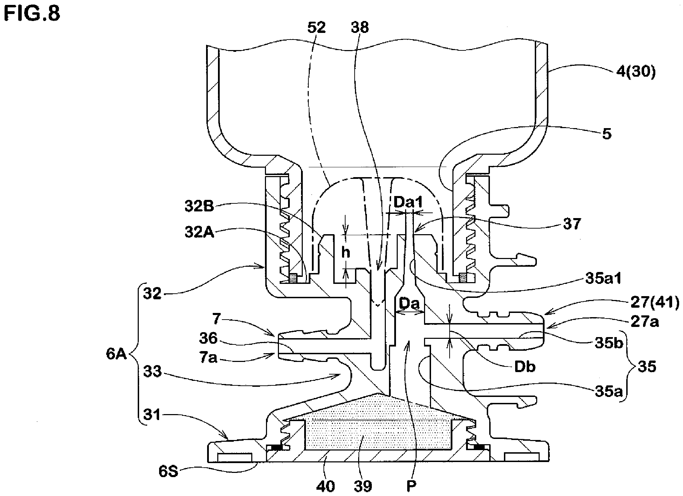

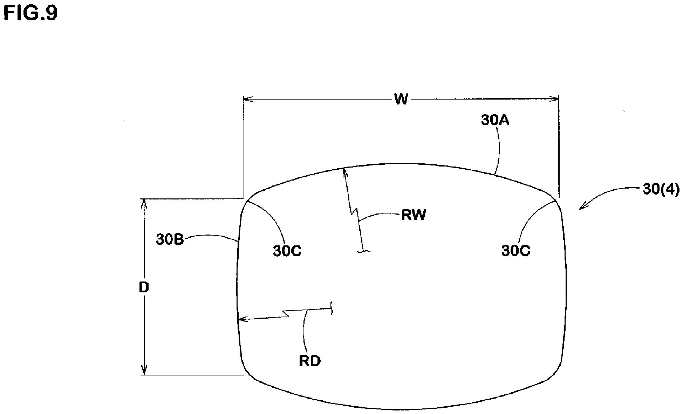

As shown in Fig. 8, the bottle container 4 has the small-diameter cylindrical opening portion 5 protruding from a lower end of the bottle waist portion 30 through which a puncture sealant can be taken in and out. In this example, as shown in Fig. 9, the bottle waist portion 30 is formed in an approximately rectangular shape in which a horizontal cross section orthogonal to a direction of height is surrounded by a pair of longer side portions 30A and a pair of shorter side portions 30B. In this example, the longer side portions 30A and the shorter side portions 30B are curved in a convex arc shape toward the outside of the bottle. Assuming that the length of the longer side portions 30A is designated as w; the curvature radius of the longer side portions 30A as RW; the length of the shorter side portions 30B as D; and the curvature radius of the shorter side portions 30B as RD, the lengths and the curvature radii are preferably set so as to satisfy the following equations (1) to (3):

$$1.3 <= W/D <= 1.7 \qquad \ldots (1)$$

$$0.5 <= RW/W <= 3.0 \qquad \ldots (2)$$

$$0.5 <= RD/D <= 20.0 \qquad \ldots (3)$$

Considering the storage property of the puncture repair kit 1 within a vehicle, for example, within a trunk of the vehicle, the bottle waist portion 30 of the bottle container 4 is preferably formed in an approximately rectangular shape since the compressor device 2 has an approximately rectangular shape. However, on puncture repair, the bottle container 4 is placed under a high internal pressure of near 350 kPa, for example. At that time, if the bottle waist portion 30 is circular in cross section, the bottle waist portion 30 expands evenly in a radial direction due to the internal pressure, and therefore the deformation of the bottle waist portion 30 filled with compressed air is less recognized, which provides a user with a smaller feeling of anxiety. However, if the bottle waist portion 30 is rectangular in cross section, the bottle waist portion 30 does not expand uniformly but deforms so as to change from a rectangular shape to a circular shape in cross section, due to the internal pressure, and therefore the amount of the deformation may be felt larger than actual.

Therefore, the deformation may generate a sense of anxiety about a burst or the like in a user, even though the deformation is within a pressure-resistant range.

In this example, therefore, the longer side portions 30A and the shorter side portions 30B are formed in advance in a convex arc shape which is near a shape deformed on expansion. Accordingly, it is possible to make the deformation of the bottle waist portion 30 less recognizable at filling of compressed air, while improving the bottle waist portion 30 in storage property, thereby decreasing the user's anxiety.

The inventor have conducted experiments and revealed that it is important to reduce the amount of expansion of the bottle waist portion 30 on the longer side to alleviate the user's anxiety, and, for this end, it is preferred to set the length W larger and set the curvature radius RW smaller on the longer side. If the ratio W/D is less than 1.3 or the ratio RW/W exceeds 3.0, the length W becomes relatively small or the curvature radius RW becomes large, which leads to increase in amount of expansion of the bottle waist portion 30 on the longer side. In contrast, if the ratio W/D exceeds 1.7 or the ratio RW/W is less than 0.5, there arises a disadvantage in storage property. If the ratio RD/D exceeds 20.0, the amount of expansion of the bottle waist portion 30 on the shorter side increases and the deformation of the bottle waist portion 30 filled with compressed air becomes large, and in contrast, if the ratio RD/D becomes less than 0.5, there arises a disadvantage in storage property.

In addition, each of corners of the bottle waist portion 30 at which the longer side portions 30A and the shorter side portions 30B intersect, are preferably formed by an arc 30C with a curvature radius of 15 mm±5 mm to lessen stress concentration and enhance pressure-resistant performance.

Next, as shown in Fig. 8, the cap 6 has a cap main body 6A including integrally a disc-like bottom plate portion 31 constituting a bottom surface 6S; a bottle mounting portion 32 for mounting the opening portion 5 of the bottle container 4; and a constricted waist portion 33 disposed between the bottom plate portion 31 and the bottle mounting portion 32. Protruded from the waist portion 33 are the air intake opening portion 27 with an intake opening 27a for feeding compressed air from the compressed air discharge opening portion 8 into the bottle container 4 and the sealant/compressed air retrieval opening portion 7 with a retrieval opening 7a for sequentially retrieving the puncture sealant and the compressed air from the bottle container 4 by the feeding of the compressed air. Formed within the cap main body 6A are an air flow path 35 extending from the intake opening 27a into the opening portion 5 of the bottle container 4; and a sealant/compressed air retrieval flow path 36 extending from the retrieval opening 7a into the opening portion 5 of the bottle container 4.

The bottle mounting portion 32 has a mounting depression 32A for fixing the opening portion 5 and a boss portion 32B rising from a bottom surface of the mounting depression 32A. The mounting depression 32A is capable of screwing the opening portion 5 thereto by an inner screw provided on an inner wall surface thereof. Provided on an upper surface of the boss portion 32B are an air flow path upper opening 37 formed by an open upper end of the air flow path 35 and a sealant/compressed air retrieval flow path upper opening 38 formed by an open upper end of the sealant/compressed air retrieval flow path 36.

The air flow path 35 is formed by a vertical air flow path portion 35a extending downward from the air flow path upper opening 37; and a horizontal air flow path portion 35b intersecting at a right angle with the vertical air flow path portion 35a at an intersection point P and extending from the intersection point P to the intake opening 27a. Formed at a lower end of the vertical air flow path portion 35a beyond downward the intersection point P is a sealant storage portion 39 for storing a puncture sealant flowing back from the air flow path upper opening 37. The sealant storage portion 39 is made larger in diameter than the vertical air flow path portion 35a.

On puncture repair, a user first uses the puncture repair kit 1 to pump up the puncture tire T by sequentially injecting a puncture sealant and compressed air. Then, the user removes the puncture repair kit 1 with the compressor device 2 and the bottle unit 3 connected together from the tire T, and loads the same into the vehicle, and then drives the vehicle for about ten minutes to seal the puncture. After that, the user connects the puncture repair kit 1 again to the tire T, and then checks the tire T for air pressure and refills the same with air, thereby completing the puncture repair. During the repair work, the bottle unit 3 charged with a sealant is inclined and vibrated in various directions. Thus, the puncture sealant left in the bottle unit 3 may flow back from the air flow path upper opening 37 into the compressor device 2, thereby causing damage to the compressor device 2. Accordingly, the sealant storage portion 39 is formed to prevent the sealant flowing back into the compressor device 2. Therefore, the capacity of the sealant storage portion 39 may correspond to the amount of the sealant left in the bottle unit 3, and is set within a range of 5 to 15 cc in this example. If the capacity is less than 5 cc, there is a possibility that the backward flowing sealant cannot be stored. In contrast, the capacity exceeding 15 cc is wasteful and leads to an unnecessarily large size of the cap 6, thereby resulting in reduction of storage property.

To suppress the backflow of the sealant from the air flow path upper opening 37, it is preferred to provide the vertical air flow path portion 35a on the upper end side with a constricted portion 35a1 having a decreased inner diameter, thereby to decrease an inner diameter Da1 of the air flow path upper opening 37 so as to fall within a range of 1.0 to 2.0 mm. In addition, when an inner diameter Da of the vertical air flow path portion 35a is made larger than an inner diameter Db of the horizontal air flow path portion 35b at the intersection point P, it is possible to enhance the effect of suppressing outflow of the sealant from the vertical air flow path portion 35a to the horizontal air flow path portion 35b. In this example, the inner di ameter Db of the horizontal air flow path portion 35b is about 3.0 to 5.0 mm. To suppress backflow of the sealant from the air flow path upper opening 37, it is also preferred to form the air flow path upper opening 37 above the sealant/compressed air retrieval flow path upper opening 38, and in particular, it is preferred to set height h of the air flow path upper opening 37 from the seal ant/compressed air retrieval flow path upper opening 38, at 5.0 to 7.0 mm.

The sealant storage portion 39 is opened on the bottom surface 6s of the cap 6, and the opening is closed by a storage portion lid 40 flush with the bottom surface 6S.

Next, the air intake opening portion 27 is formed as a connection nozzle 41 protruding from the waist portion 33 toward the compressed air discharge opening portion 8. when the connection nozzle 41 is inserted and fitted into the nozzle receiver 28, the compressor device 2 and the bottle unit 3 are directly connected together.

The connecti on nozzle 41 includes a nozzle main body 41A wi th a constant outer diameter and a tapered surface portion 41B in the shape of a tapered cone at a leading end si de of the nozzle main body 41A. The tapered surface portion 41B has almost the same inclination as that of the tapered hole portion 28C on the back side of the nozzle receiver 28. Therefore, when the connection nozzle 41 is inserted into the nozzle receiver 28, the back tapered hole portion 28c forms a contact surface 42 that comes into contact with the tapered surface portion 41B and receives it. Accordingly, the connection nozzle 41 and the nozzle receiver 28 are directly connected at a concentric and correct position. A tapered hole portion 28B on the front side of the nozzle receiver 28 functions as a guide for insertion of the connection nozzle 41.

The connection nozzle 41 has o-rings 43 on an outer periphery of the nozzle main body 41A so as to seal between the connection nozzle 41 and an inner surface of the nozzle receiver 28 (in this example, an inner surface of the parallel hole portion 28A). In this example, two o-rings 43 are attached for reliable sealing. when the o-rings 43 as consumables are disposed on the bottle unit 3 side, the compressor device 2 can be repeatedly used without the need for maintenance.

Next, the cap 6 has a pair of lock pawls 45 projecting on both sides (in this example, vertically both sides) of the connection nozzle 41 as the air intake opening portion 27. In addition, the compressor device 2 has at positions opposed to the lock pawls 45 pawl engagement holes 46 that engage with the lock pawls 45 and fix the compressor devi ce 2 and the bottle uni t 3 in the directly connected state.

The lock pawls 45 each have a main portion 45A extending from the cap main body 6A in parallel to the connection nozzle 41 and a right-triangular hook portion 45B projecting outward at a leading end of the main portion 45A. The pawl engagement holes 46 engage with the hook portions 45B.

The lock pawls 45 and the cap main body 6A are formed as an integrated molded body made of plastic such as nylon, polypropylene, and pol yethyl ene, or rei nforced plastic formed by mi xi ng such pl asti c wi th short fibers such as gl ass fibers, for example. In this example, the pawl engagement holes 46 are each formed by a frame 47 supported by the cylindrical portion 25 constituting the nozzle receiver 28. In addition, the frame 47, the cylindrical portion 25, and the cylinder 12 are formed as an integrated molded body made of lightweight alloy such as zinc alloy or aluminum alloy, for example.

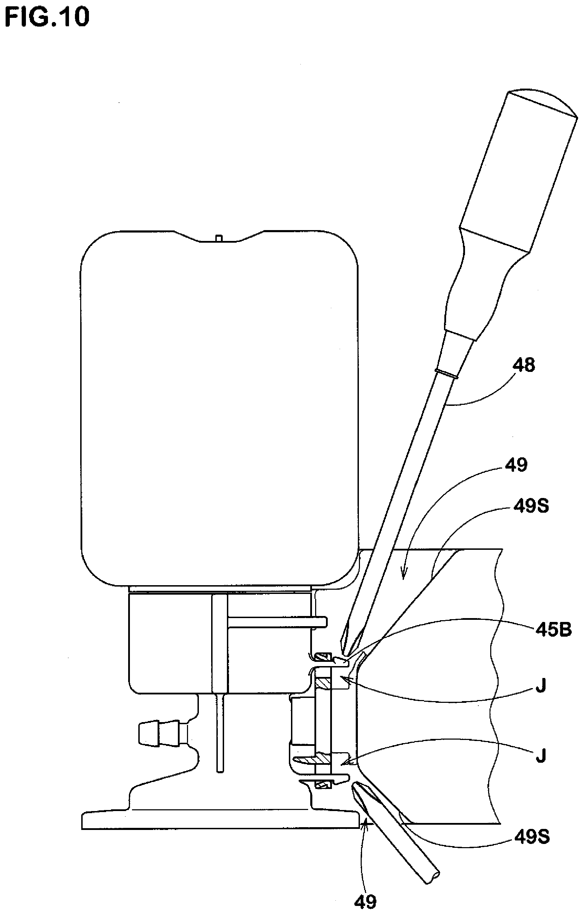

In this example, as shown in Figs. 2 and 10, the compressor device 2 has in the storage case 9 a guide groove 49 for guiding a bar-like jig 48 such as a screw dri ver to engagement portions J between the lock pawls 45 and the pawl engagement holes 46 to disengage the pawls and the holes. The guide groove 49 is inclined toward the engagement potions J with groove bottoms 49s as guide surfaces, and is capable of guiding the bar-like jig 48 to the engagement portions J between the groove bottoms 49S and groove wall surfaces on both sides of the groove bottoms 49S. The lock pawls 45 have the outwardly extending hook portions 45B, and therefore can easily release the engagement by pressing inward the hook portions 45B by the use of the bar-like jig 48.

In this arrangement, when the bottle unit 3 is pressed into the compressor device 2, it is possible to realize at the same time direct connection between the compressed air discharge opening porti on 8 (the nozzle recei ver 28 in this example) and the air intake opening portion 27 (the connection nozzle 41 in this example) and engagement between the lock pawls 45 and the pawl engagement holes 46. Concurrently, a press force for the foregoing pressing preferably falls within a range of 2 to 10 kgf, and if the press force exceeds 10 kgf, the compressor device 2 significantly deteriorates in operability. In contrast, if the press force is less than 2 kgf, the fixation of the components becomes weak, which may lead to disconnection due to an internal pressure on the filling.

As described above, the puncture repair kit 1 allows the compressor device 2 and the bottle unit 3 to be directly connected without intervention of a hose or the like. Accordingly, it is possible to integrate the two components and lower the same in position of a gravity center, thereby suppressing turnover of the two components with increased stability in grounding. At that time, in the directly connected state, the bottom surface 6S of the cap 6 and the bottom surface 2S of the compressor device 2 are preferably made flush with each other. This increases a grounding area and enhances a force of friction with a road surface during operation of the compressor, whereby it is possible to improve not only stability in installation but also stability against vibrations of the compressor. In addition, the puncture repair kit 1 does not need a conventional hose on an air intake side, thereby eliminating a possibility of incorrect hose laying. The lock pawl s 45 and the pawl engagement holes 46 allows the bottle unit 3 to be securely fixed to the compressor device 2 only with one operation concurrently with the direct connection. This makes it possible to prevent disconnection during puncture repair.

In addition, as shown in Fig. 2, the compressor device 2 has on one outsi de surface 14a1 an approximately semicircular recei vi ng depression 53 that follows the outer shape of the bottle unit 3 and allows the bottle unit 3 to be stably seated therein.

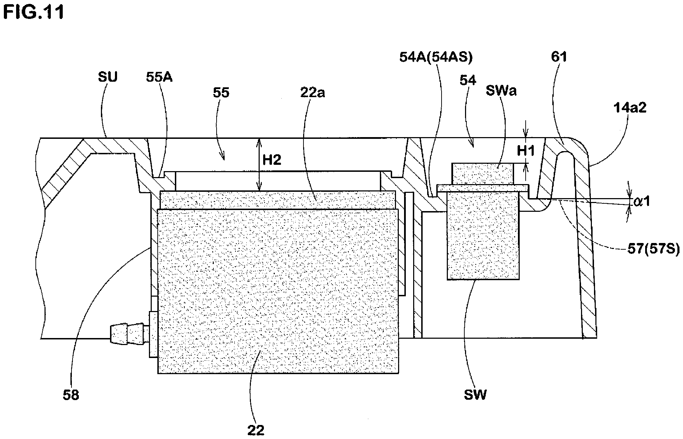

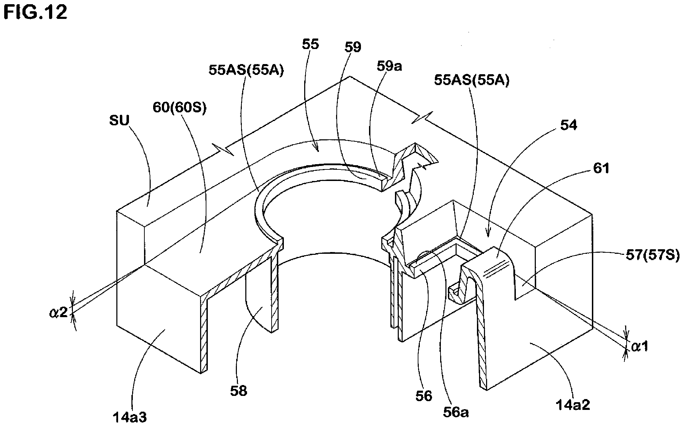

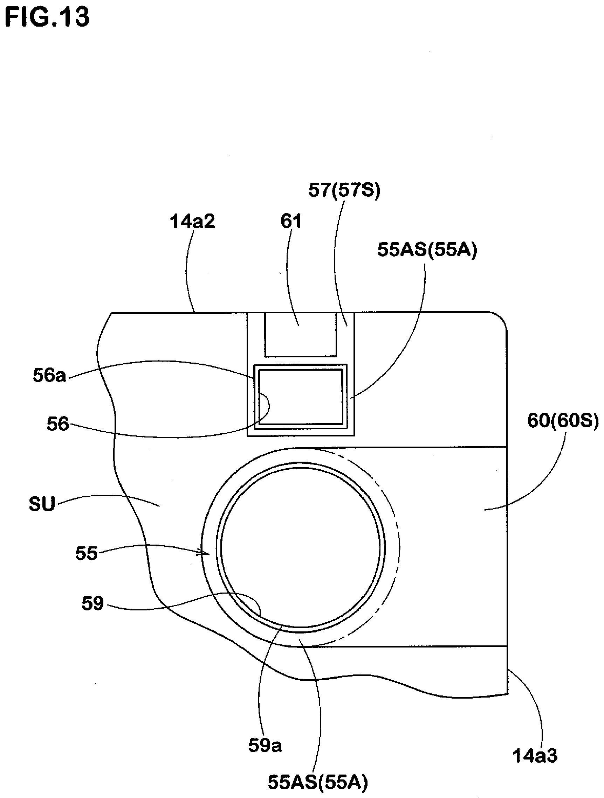

Next, as shown in Figs. 2 and 11 to 13, the storage case 9 has on an upper surface SU (hereinafter, referred to as a case upper surface SU) thereof a switch mounting depression 54 for mounting the power switch SW and a pressure gauge mounting depression 55 for mounting the pressure gauge 22. The power switch SW is mounted at a bottom portion 54A of the switch mounting depression 54, at a distance H1 of 3 to 15 mm from the case upper surface SU toward the lower side. The pressure gauge 22 is mounted at a bottom portion 55A of the pressure gauge mounting depression 55, at a distance H2 of 3 to 15 mm from the upper surface SU toward the lower side.

The power switch sw may have a well-known structure with an operation portion SWa for ON/OFF operations at an upper part thereof, such as a seesaw switch, for example. In this example, the switch mounti ng depressi on 54 has at a bottom portion 54A thereof a mounti ng hole 56 for mounting the power switch sw from above. Provided around the hol e 56 i s a surroundi ng rib 56a protruding from the bottom porti on upper surface 54AS with a small height of about 0.5 to 1.0 mm, for example, thereby suppressing invasion of rainwater or the like into the hole 56.

Formed on the case upper surface SU are drainage channels 57 extending from the mounting depression 54 at a downward incline toward an outer wall surface 14a2 of the storage case closest to the mounting depression 54. In this example, a plurality of, for example, two drainage channels 57 are disposed. In this example, therefore, a block-like rising portion 61 sandwiched between the drainage channels 57 and 57 and having the same height as that of the case upper surface SU is formed between the power switch SW and the outer wall surface 14a2. The drainage channels 57 each have a channel bottom surface 57S that is connected smoothly to the bottom portion upper surface 54AS and is inclined downward at an angle $\alpha$1 of 0.3 to 3.0° with respect to a horizontal surface. The bottom portion upper surface 54AS may be horizontal, but is preferably inclined in the same manner as the drainage channels 57.

Next, the pressure gauge 22 may have a well-known structure with a display portion 22a on an upper part thereof. The pressure gauge mounting depression 55 has an annular rib 58 projecting from a lower surface of a bottom portion 55A. The pressure gauge 22 is mounted from below between the lower surface and an inner peripheral surface of the annular rib 58. The bottom portion 55A has on an inside of the annular rib 58 a window hole 59 for exposure of the display portion 22a. Provided around the hole 59 is a surrounding rib 59a protruding with a small height of about 0.5 to 1.0 mm, for example, from the bottom portion upper surface 55AS, thereby suppressing invasion of rainwater or the like into the hole 59.

Formed on the case upper surface SU is a drainage channel 60 extending at a downward incline from the mounting depression 55 toward an outer wall surface 14a3 of the storage case closest to the mounting depression 55. In this example, one wide drainage channel 60 with approximately the same width as that of the mounting depression 55, is disposed. The drainage channel 60 also has a channel bottom surface 60S that is connected smoothly to the bottom portion upper surface 55AS and is inclined downward at an angle $\alpha$2 of 0.3 to 3.0° with respect to the horizontal surface. The bottom portion upper surface 55AS may be horizontal, but is preferably inclined in the same manner as the drainage channel 60.

As described above, the power switch sw and the pressure gauge 22 are mounted at the distances H1 and H2 of 3 to 15 mm from the case upper surface su toward the lower side. Therefore, even if the compressor device 2 is fallen down by mistake during a connection operation at a site of puncture repair, it is possible to prevent the power switch sw and the pressure gauge 22 from being broken due to direct collision against the ground. Particularly in this example, the rising portion 61 is disposed between the power switch sw and the outer wall surface 14a2, thereby making it possible to protect the power switch sw as an important component in a more reliable manner.

since the drainage channels 57 and 60 are formed on the case upper surface SU so as to extend at a downward incline from the mounting depressions 54 and 55 toward the outer wall surfaces 14a2 and 14a3, it is possible to prevent an electric failure resulting from rainwater because, even when being used in the rain, rainwater does not pile up in the mounting depressions 54 and 55.

If the distances H1 and H2 are less than 3 mm, the effect of preventing breakage is insufficient. If the distances H1 and H2 exceed 15 mm, the power switch sw decreases in operability and the pressure gauge 22 deteriorates in visibility. Therefore, the lower limit for the distances H1 and H2 is preferably 5 mm or more, and the upper limit for the same is preferably 10 mm or less.

The feeding hose 29 is connected to the sealant/compressed air retrieval opening portion 7. when being not in use, the feeding hose 29 is stored in a state of bei ng wound around the wai st porti on 33 as shown in Fig. 14.

The bottle unit 3 has at the boss portion 32B an inner stopper 52 for closing the air flow path upper opening 37 and the sealant/compressed air retrieval flow path upper opening 38, as shown by alternate long and short dash lines in Fig. 8, so as to prevent outflow of the puncture sealant from the bottle container 4 when the bottle unit 3 is not in use. The inner stopper 52 can be removed from the boss portion 32B due to pressure rise by compressed air from the compressor device 2.

As in the foregoing, the particularly preferred embodiment of the present invention is described in detail. However, the present invention is not limited to the illustrated embodiment but can be carried out in various modified manners. For example, the compressed air discharge opening portion 8 may be formed as the connection nozzle 41, and the air intake opening portion 27 may be formed as the nozzle receiver 28.

## Claims

1. A puncture repair kit (1), comprising:

   a compressor device (2), including a power switch (SW), and a compressor main body (13) that is driven by the power switch (SW) and generates compressed air, stored within a rectangular box-shaped storage case; and
   a bottle unit (3), including a bottle container (4) containing a puncture sealant and a cap (6) attached upon an opening portion of the bottle container (4), wherein

   the compressor device (2) includes a compressed air discharge opening portion (8) for discharging compressed air, the cap (6) is provided with an air intake opening portion (27) for feeding compressed air from the compressed air discharge opening portion (8) into the bottle container (4), and a puncture sealant/compressed air retrieval opening portion (7) for sequentially retrieving the puncture sealant and the compressed air from the bottle container (4) by the feeding of the compressed air,
   one of the compressed air discharge opening portion (8) and the air intake opening portion (27) includes a connection nozzle (41) protruding toward the other in a forward direction, and the other includes a nozzle receiver (28) into which the connection nozzle (41) is inserted and fitted, which allows direct connection of the compressor device (2) and the bottle unit (3),
   **characterized in that**
   the compressor device (2) includes a pressure gauge (22) that measures a pressure of the compressed air from the compressor main body (13), stored within a rectangular box-shaped storage case (9),
   the cap (6) includes a bottom plate portion (31) constituting a bottom surface (6S), a bottle mounting portion (32) for mounting the opening portion (5) of the bottle container (4), and a constricted waist portion (33) disposed between the bottom plate portion (31) and the bottle mounting portion (32),
   the waist portion (33) is provided with the air intake opening portion (27) and the puncture sealant/compressed air retrieval opening portion (7),
   the storage case (9) has on an upper surface (SU) thereof a switch mounting depression (54) for mounting the power switch (SW) and a pressure gauge mounting depression (55) for mounting the pressure gauge (22), the power switch (SW) and the pressure gauge (22) being mounted upon bottom portions of the respective mounting depressions (54, 55) at a distance of 3 to 15 mm downward from the upper surface (SU), and
   drainage channels (57, 60) are formed upon the upper surface (SU) so as to extend at a downward incline from the mounting depressions (54, 55) toward outer side surfaces of the storage case (9).

2. The puncture repair kit according to Claim 1, wherein the drainage channel (57, 60) has a channel bottom surface (57S, 60S) inclined downward at an angle ($\alpha$1, $\alpha$2) of 0.3 to 3.0° with respect to a horizontal surface.

3. The puncture repair kit according to claim 1 or 2, wherein
   the compressor main body (13) includes a motor (M); a piston (10) connected to the motor (M) via a crank mechanism (17); and a cylinder (12) that stores the piston (10) in a reciprocable manner and forms a pump chamber (11) for compressing air between the cylinder (12) and the piston (10), and
   the cylinder (12) includes integrally the compressed air discharge opening portion (8), and the compressed air discharge opening portion (8) is formed by the nozzle receiver (28).

4. The puncture repair kit according to any of claims 1 to 3, wherein
   in the state of the direct connection, a bottom surface (2S) of the compressor device (2) and a bottom surface (6S) of the cap (6) are flush with each other.

**Patentansprüche**

1. Lochreparatur-Set (1), umfassend:

   eine Kompressoreinrichtung (2), die einen Stromschalter (SW) und einen Kompressorhauptkörper (13) umfasst, der durch den Stromschalter (SW) betrieben ist und Druckluft erzeugt und in einem rechteckigen, kastenförmigen Aufbewahrungsgehäuse untergebracht ist; und
   eine Flascheneinheit (3), die einen Flaschenbehälter (4) umfasst, der ein Lochdichtmittel und einen Deckel (6) umfasst, der auf einem Öffnungsabschnitt des Flaschenbehälters (4) angebracht ist, wobei

   die Kompressoreinrichtung (2) einen Druckluft-Austragsöffnungsabschnitt (8) zum Austragen von Druckluft umfasst, der Deckel (6) mit einem Luft-Einlassöffnungsabschnitt (27) zum Einspeisen von Druckluft von dem Druckluft-Austragsöffnungsabschnitt (8) in den Flaschenbehälter (4) und einem Lochdichtmittel/Druckluft-Entnahmeöffnungsabschnitt (7) zum aufeinanderfolgenden Entnehmen des Lochdichtmittels und der Druckluft aus dem Flaschenbehälter (4) durch das Einspeisen der Druckluft versehen ist,
   einer von dem Druckluft-Austragsöffnungsabschnitt (8) und dem Luft-Einlassöffnungsabschnitt (27) einen Anschlussstutzen (41) umfasst, der zu dem anderen in einer Richtung nach vorne vorsteht, und der andere eine Stutzenaufnahme (28) umfasst, in welche der Anschlussstutzen (41) eingesetzt und festgelegt ist, was eine direkte Verbindung der Kompressoreinrichtung (2) und der Flascheneinheit (3) zulässt,
   **dadurch gekennzeichnet, dass**
   die Kompressoreinrichtung (2) einen Druckmesser (22) umfasst, der einen Druck der Druckluft aus dem Kompressorhauptkörper (13) misst und in einem rechteckigen, kastenförmigen Aufbewahrungsgehäuse (9) untergebracht ist,
   der Deckel (6) einen Bodenplattenabschnitt (31), der eine Bodenfläche (6S) bildet, einen Flaschenmontageabschnitt (32) zum Montieren des Öffnungsabschnitts (5) des Flaschenbehälters (4) und einen verengten Taillenabschnitt (33), der zwischen dem Bodenplattenabschnitt (31) und dem Flaschenmontageabschnitt (32) angeordnet ist, umfasst,
   der Taillenabschnitt (33) mit dem Luft-Einlassöffnungsabschnitt (27) und dem Lochdichtmittel/Druckluft-Entnahmeöffnungsabschnitt (7) versehen ist,
   das Aufbewahrungsgehäuse (9) an einer oberen Fläche (SU) eine Schaltermontagevertiefung (54) zum Montieren des Stromschalters (SW) und eine Druckmessermontagevertiefung (55) zum Montieren des Druckmessers (22) aufweist, wobei der Stromschalter (SW) und der Druckmesser (22) auf Bodenabschnitten der jeweiligen Montagevertiefungen (54, 55) in einem Abstand von 3 bis 15 mm nach unten von der oberen Fläche (SU) montiert sind, und Ablaufkanäle (57, 60) auf der oberen Fläche (SU) gebildet sind, so dass sie sich unter einer Neigung nach unten von den Montagevertiefungen (54, 55) in Richtung der Außenseitenflächen des Aufbewahrungsgehäuses (9) erstrecken.

2. Lochreparatur-Set nach Anspruch 1, wobei der Ablaufkanal (57, 60) eine Kanalbodenfläche (57S, 60S) umfasst, die unter einem Winkel ($\alpha$1, $\alpha$2) von 0,3 bis 3,0° mit Bezug auf eine horizontale Fläche geneigt ist.

3. Lochreparatur-Set nach Anspruch 1 oder 2, wobei

   der Kompressorhauptkörper (13) einen Motor (M); einen Kolben (10), der mit dem Motor (M) über einen Kurbelmechanismus (17) verbunden ist; und einen Zylinder (12), der den Kolben (10) auf eine hin- und hergehende Weise aufnimmt und eine Pumpenkammer (11) zum Komprimieren von Luft zwischen dem Zylinder (12) und dem Kolben (10) bildet, umfasst, und
   der Zylinder (12) integral den Druckluft-Auftragsöffnungsabschnitt (8) umfasst, und der Druckluft-Austragsöffnungsabschnitt (8) durch die Stutzenaufnahme (28) gebildet ist.

4. Lochreparatur-Set nach einem der Ansprüche 1 bis 3, wobei in dem Zustand der direkten Verbindung eine Bodenfläche (2S) der Kompressoreinrichtung (2) und eine Bodenfläche (6S) des Deckels (6) bündig miteinander sind.

**Revendications**

1. Kit de réparation pour crevaison (1), comprenant :

   un dispositif compresseur (2), incluant un commutateur de puissance (SW), et un corps principal de compresseur (13) qui est entraîné par le commutateur de puissance (SW) et génère de l'air comprimé, stocké dans un casier de stockage en forme de boîte rectangulaire ; et
une unité en bouteille (3), incluant un conteneur en bouteille (4) contenant un produit d'étanchement de crevaison et un capuchon (6) attaché sur une portion d'ouverture du conteneur en bouteille (4), dans lequel

le dispositif compresseur (2) inclut une portion d'ouverture de décharge d'air comprimé (8) pour décharger de l'air comprimé,

le capuchon (6) est pourvu d'une portion d'ouverture d'admission d'air (27) pour alimenter l'air comprimé provenant de la portion d'ouverture de décharge d'air comprimé (8) jusque dans le conteneur en bouteille (4), et une portion d'ouverture de récupération de produit d'étanchement de crevaison/d'air comprimé (7) pour récupérer en séquence le produit d'étanchement de crevaison et l'air comprimé hors du conteneur en bouteille (4) par l'alimentation d'air comprimé,

une portion parmi la portion d'ouverture de décharge d'air comprimé (8) et la portion d'ouverture d'admission d'air (27) inclut une buse de connexion (41) qui se projette vers l'autre dans une direction d'avance,

et l'autre inclut un récepteur de buse (28) dans lequel la buse de connexion (41) est insérée et engagée, ce qui permet une connexion directe du dispositif compresseur (2) et de l'unité à bouteille (3),

**caractérisé en ce que**

le dispositif compresseur (2) inclut une jauge de pression (22) qui mesure une pression de l'air comprimé venant du corps principal de compresseur (13), stocké dans un casier de stockage en forme de boîte rectangulaire (9),

le capuchon (6) inclut une portion en plaque de fond (31) constituant une surface de fond (6S), une portion de montage de bouteille (32) pour monter la portion d'ouverture (5) du conteneur en bouteille (4), et une portion de taille rétrécie (33) disposée entre la portion en plaque de fond (31) et la portion de montage de bouteille (32),

la portion de taille (33) est dotée de la portion d'ouverture d'admission d'air (27) et de la portion d'ouverture de récupération de produit d'étanchement de crevaison/d'air comprimé (7),

le casier de stockage (9) possède sur sa surface supérieure (SU) une dépression de montage de commutateur (54) pour monter le commutateur de puissance (SW) et une dépression de montage de jauge de pression (55) pour monter la jauge de pression (22), le commutateur de puissance (SW) et la jauge de pression (22) étant montés sur des portions de fond des dépressions de montage respectives (54, 55) à une distance de 3 à 15 mm vers le bas depuis la surface supérieure (SU), et

des canaux de drainage (57, 60) sont formés sur la surface supérieure (SU) de manière à s'étendre suivant une inclinaison descendante depuis les dépressions de montage (54, 55) vers les surfaces latérales extérieures du casier de stockage (9).

2. Kit de réparation pour crevaison selon la revendication 1, dans lequel le canal de drainage (57, 60) présente une surface de fond de canal (57S, 60S) inclinée vers le bas sous un angle ($\alpha$1, $\alpha$2) de 0,3 à 3,0° par rapport à une surface horizontale.

3. Kit de réparation pour crevaison selon la revendication 1 ou 2, dans lequel
le corps principal de compresseur (13) inclut un moteur (M) ; un piston (10) connecté au moteur (M) via un mécanisme à manivelle (17) ; et un cylindre (12) qui abrite le piston (10) de manière à effectuer un va-et-vient et forme une chambre de pompe (11) pour comprimer l'air entre le cylindre (12) et le piston (10), et
le cylindre (12) inclut de façon intégrale la portion d'ouverture de décharge d'air comprimé (8), et la portion d'ouverture de décharge d'air comprimé (8) est formée par le récepteur de buse (28).

4. Kit de réparation pour crevaison selon l'une quelconque des revendications 1 à 3, dans lequel
dans l'état de connexion directe, une surface de fond (2S) du dispositif compresseur (2) et une surface de fond (6S) du capuchon (6) sont en affleurement l'une avec l'autre.

**FIG.1**

FIG.2

## FIG.3

**FIG.4**

## FIG.5

**FIG.6**

**FIG.7**

46

45B(45)

27(41)

8(28)  43  41B  28C

45

**FIG.8**

FIG.9

# FIG.10

**FIG.11**

EP 2 497 627 B1

**FIG.12**

EP 2 497 627 B1

FIG.13

57(57S)

14a2    61

55AS(55A)

56a

56

60(60S)

SU

55

59

59a

55AS(55A)

14a3

24

# FIG.14

**FIG.15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1291158 A1
- EP 1605162 A2
- DE 19846451 A1
- JP 2000108215 A